# EUROPÄISCHE PATENTSCHRIFT

(11) **EP 4 397 168 B1**
(45) Veröffentlichungstag und Bekanntmachung des Hinweises auf die Patenterteilung: **03.06.2026**
(21) Anmeldenummer: 23214697.7
(22) Anmeldetag: 06.12.2023
(51) Int. Cl.: A01D 34/135, A01D 63/04

(54) **MÄHMESSERVORRICHTUNG MIT EINEM ALS DOPPELMESSER-SCHNEIDSYSTEM AUSGEBILDETEN SCHNEIDWERK**
MOWING BLADE DEVICE WITH A CUTTING DEVICE IN THE FORM OF A DOUBLE BLADE CUTTING SYSTEM
DISPOSITIF DE COUPE DOTÉ D'UNE BARRE DE COUPE CONÇUE SOUS LA FORME D'UN SYSTÈME DE COUPE À DOUBLE LAME

(30) Priorität: 04.01.2023 DE 102023100189
(43) Veröffentlichungstag der Anmeldung: 10.07.2024
(73) Patentinhaber: Kersten, Georg, 46459 Rees (DE)
(72) Erfinder: Kersten, David, 46459 Rees (DE); Sons, Daniel, 46499 Hamminkeln (DE)
(74) Vertreter: Völler-Blumenroth, Johannes Florian

(56) Entgegenhaltungen:
- DE-A1- 4 020 114
- US-A- 3 058 288

## Beschreibung

Die vorliegende Erfindung betrifft eine Mähmesservorrichtung mit einem als Doppelmesser-Schneidsystem ausgebildeten Schneidwerk.

Derartige Mähmesservorrichtungen sind aus dem Stand der Technik bekannt. Problematisch bei einer derartigen Mähmesservorrichtung ist, dass diese breiter als ein Schnittbereich des Schneidwerks der Mähmesservorrichtung ist. Bei einem Doppelmesser-Schneidsystem müssen zum Schneiden des Schnittguts jeweils zwei Schneiden zusammenwirken. Zumindest auf der dem noch nicht geschnittenen Schnittgut zugewandten Seite der Mähmesservorrichtung wird nicht geschnittenes Schnittgut durch das äußerste, eine Schneide aufweisende Element niedergedrückt. Niedergedrücktes Schnittgut kann von einer Mähmesservorrichtung mit einem Doppelmesser-Schneidsystem nicht optimal geschnitten werden, insbesondere, wenn das Schnittgut in derselben Fahrtrichtung überfahren wird, in der es einem vorherigen Mähvorgang niedergedrückt wurde. Dies ist besonders problematisch, wenn das Schnittgut zwischen zwei Mähvorgängen keine Zeit hat, sich wiederaufzurichten, insbesondere, wenn zwei hintereinander und seitlich versetzt zueinander angeordnete Mähmesservorrichtungen verwendet werden. Schneidwerkskombinationen, die ein Frontmähwerk mit einem Seitenmähwerk kombinieren, sind hiervon besonders betroffen. Hier überfährt eine in Fahrtrichtung hinter einer ersten Mähmesservorrichtung angeordnete weitere Mähmesservorrichtung das niedergedrückte Schnittgut im Abstand von wenigen Zentimetern in derselben Richtung. Der niedergedrückte Streifen an Schnittgut wird nicht oder nur schlecht gemäht. Es kommt zu einer Streifenbildung. In dem Streifen geht ein Teil des zur Verfügung stehenden Schnittguts verloren.

Aus dem Stand der Technik sind verschiedene Mähmesservorrichtungen bekannt, die das Problem der Streifenbildung auf unterschiedliche Weise adressieren. So schlägt die DE 20 2020 106 292 U1 vor, bei einer Mähmesservorrichtung jeweils an den seitlichen Enden des Schneidwerks ein Leitblech mit einem Abweiser anzuordnen, der in vertikaler Richtung von oben mindestens bis zur Schneidebene des Schneidwerks ragt. Durch das Leitblech mit dem Abweiser soll das Niederdrücken des Schnittguts durch das äußerste Element des Schneidwerks verringert werden.

Aus der DE 4 014 624 C2 ist eine Mähmesservorrichtung bekannt, bei der ein Außenschuh vom äußeren Abschluss des Schnittbereichs nach innen versetzt angeordnet ist. Hierdurch wird das Niederdrücken durch den Schuh verringert. Das Schnittgut wird jedoch weiterhin durch das äußerste Element des als Doppelmesser-Schneidsystem ausgebildeten Schneidwerks niedergedrückt.

Die US 3 058 288 A offenbart eine Mähmesservorrichtung mit einem als Doppelmesser-Schneidsystem ausgebildeten Schneidwerk, wobei die Mähmesservorrichtung eine Gegenschneide aufweist, die mit einem an einem Untermesserrücken des Schneidwerks angeordnetem Messer zusammenwirkt. Das Messer ist dabei bündig mit dem Messerrücken abschließend angeordnet.

Aufgabe der vorliegenden Erfindung ist es, eine eingangs genannte Mähmesservorrichtung bereitzustellen, die einfach aufgebaut und zuverlässig ist und die Streifenbildung gegenüber den vorbekannten Mähmesservorrichtungen weiter vermindert.

Gelöst wird diese Aufgabe durch eine Mähmesservorrichtung nach Anspruch 1. Die Mähmesservorrichtung umfasst eine Tragstruktur und ein an der Tragstruktur festgelegtes Schneidwerk. Das Schneidwerk ist als Doppelmesser-Schneidsystem ausgebildet. Es umfasst ein oberes Schneidmesser und ein unteres Schneidmesser. Diese können mittels eines Antriebs der Mähmesservorrichtung relativ zueinander bewegt werden. Das obere Schneidmesser sowie das untere Schneidmesser weisen jeweils einen Messerrücken auf, den Obermesserrücken und den Untermesserrücken. An diesen sind jeweils mehrere Klingenelemente festgelegt. Die am Obermesserrücken und am Untermesserrücken festgelegten Klingenelemente definieren zwischen sich eine Schneidebene des Schneidwerks. Beim Betrieb der Mähmesservorrichtung werden das obere und das untere Schneidmesser aneinander in Längsrichtung vorbeibewegt. Das Schnittgut wird zwischen zwei Klingenelementen erfasst und abgeschnitten. Die Klingenelemente sind vorzugsweise lösbar an den jeweiligen Messerrücken festgelegt, sodass diese bei Beschädigung einfach von dem Messerrücken entfernt werden können.

Typischerweise umfasst ein Klingenelement genau eine Schneideinheit mit zwei einander gegenüberliegenden Schneiden. Ein Klingenelement des oberen Schneidmessers und ein hiermit zusammenwirkendes Klingenelement des unteren Schneidmessers schließen dabei typischerweise einen Winkel zwischen 40°und 45°, insbesondere einen Winkel von 42° ein. Vorzugsweise sind das obere Schneidmesser und das untere Schneidmesser nicht nur relativ zueinander, sondern auch relativ zur Tragstruktur bewegbar ausgebildet. Erfindungsgemäß weist die Mähmesservorrichtung zudem zumindest eine relativ zur Tragstruktur ortsfest angeordnete und mit einem äußeren Klingenelement des oberen bzw. unteren Schneidmessers zusammenwirkende Gegenschneide auf. Bei dem äußeren Klingenelement, das mit der Gegenschneide zusammenwirkt, handelt es sich um das erste bzw. letzte Klingenelement des jeweiligen Schneidmessers. Das äußerste Klingenelement weist eine äußere Schneide auf, die mit der Gegenschneide zusammenwirkt. Das äußere Klingenelement ist dabei in Richtung der Gegenschneide gegenüber dem Obermesserrücken bzw. dem Untermesserrücken seitlich überstehend an diesem angeordnet. Bei der Verwendung einer Gegenschneide im äußeren Randbereich der Mähmesservorrichtung, die zur Tragstruktur ortsfest angeordnet und daher nicht bewegt ist, kann die Gegenschneide eine geringere Breite als die Klingenelemente des Schneidwerks aufweisen. Hierdurch kann das äußerste Element der Mähmesservorrichtung schmaler gestaltet werden. Ein schmaler ausgebildetes äußerstes Element drückt beim Überfahren nicht geschnittenen Schnittguts entsprechend weniger Schnittgut nieder. Die Streifenbildung wird verringert. Die Verwendung eines gegenüber dem Obermesserrücken bzw. dem Untermesserrücken seitlich überstehenden äußeren Klingenelements ermöglicht es auf einfache Weise, das Schneidwerk in diesem Bereich besonders flach auszugestalten. Hierdurch wird die Gefahr von Verstopfungen im Randbereich verringert. Dies ermöglicht eine zuverlässige Mähmesservorrichtung, die eine verringerte Streifenbildung aufweist.

Vorzugsweise weist die Mähmesservorrichtung ein seitlich des Schnittbereichs des Schneidwerks angeordnetes Leitelement auf. Besonders vorzugsweise ist dieses Leitelement als Leitblech ausgebildet. Das Leitelement dient dazu, das zu schneidende und dem Schnittbereich des Schneidwerks zuzuführende Schnittgut von dem nicht zu schneidenden und außen an der Mähmesservorrichtung vorbeizuführenden Schnittgut zu trennen. Die Verwendung eines solchen seitlich eines Schnittbereichs des Schneidwerks angeordneten Leitelements verringert die Verstopfungsneigung der Mähmesservorrichtung weiter. Die Zuverlässigkeit der Mähmesservorrichtung wird erhöht. Besonders vorzugsweise ist die Gegenschneide an dem Leitelement, insbesondere einem Leitblech, angeordnet. Durch das Anordnen der Gegenschneide an dem Leitelement, das seinerseits ortsfest relativ zur Tragstruktur der Mähmesservorrichtung an dieser festgelegt ist, ist die Gegenschneide ortsfest relativ zur Tragstruktur angeordnet. Durch das Anordnen am Leitelement selbst wird ein Abstand zwischen Leitelement und Gegenschneide, in dem sich Schnittgut verfangen kann, verringert oder gänzlich vermieden. Die Verstopfungsneigung der Mähmesservorrichtung wird verringert und die Zuverlässigkeit wird erhöht.

Bevorzugt ist das Leitelement nach vorn in Fahrtrichtung gegenüber dem Schneidwerk überstehend angeordnet und weist in Fahrtrichtung nach vorne einen zunehmenden Abstand senkrecht zur Schneidebene des Schneidwerks auf. Durch ein derart ausgebildetes Leitelement wird das ungeschnittene Schnittgut vor Erreichen der Schneidebene nicht nur in einen dem Schnittbereich zuzuführenden Teil und in einen außen an dem Mähmesservorrichtung vorbeizuführenden Teil geteilt. Es führt zudem das zwischen diesen Bereichen angeordnete Schnittgut vor Erreichen des Schneidwerks gezielt und sauber nach unten. Die Verstopfungsneigung der Mähmesservorrichtung wird weiter verringert und die Zuverlässigkeit erhöht. Das Leitelement ist besonders bevorzugt in Ansicht in Längserstreckungsrichtung des Schneidwerks konvex ausgebildet. Alternativ kann das Leitelement in dieser Ansicht keilförmig ausgebildet sein.

Vorzugsweise ist das Leitelement besonders schmal ausgebildet, insbesondere schmaler als ein Klingenelement des Schneidwerks oder schmaler als eine insbesondere am Leitelement angeordnete Gegenschneide. Das Leitelement ist dabei insbesondere auf Höhe der Schneidebene des Schneidwerks in Fahrtrichtung vor dem Schneidwerk schmaler als eine Schneideinheit eines Klingenelements und weist insbesondere eine maximale Breite von 20 mm auf. Eine Schneideinheit eines Klingenelements umfasst dabei zwei einander gegenüberliegend angeordnete Schneiden. Die typische Breite einer Schneideinheit liegt zwischen 40 mm und 80 mm. Durch ein schmales Leitelement kann das Schnittgut besonders gut geteilt werden. Zudem wird der Anteil des vom Leitelement nach unten niedergedrückten Schnittguts bei der Verwendung eines besonders schmalen Leitelements weiter verringert.

Bevorzugt ist das Leitelement im Bereich des Schneidwerks nach unten gegenüber der Schneidebene überstehend angeordnet. Ein im Bereich des Schneidwerks nach unten überstehendes Leitelement kann in einem außerhalb des Schnittbereichs des Schneidwerks gelegenen Bereichs einen gewissen Druck auf liegendes bzw. niedergedrücktes Schnittgut ausüben, durch das ein entgegengesetztes Ende des Schnittguts angehoben werden kann. Ein derart angehobenes Ende ist vom Schneidwerk besser zu erfassen und kann sauberer abgeschnitten werden. Das Schnittbild der Mähmesservorrichtung wird verbessert und die Streifenbildung reduziert. Besonders vorteilhaft ist dies in Verbindung mit der Verwendung eines besonders schmalen Leitelements, da hierdurch nur ein schmaler Streifen nicht-geschnittenen Schnittguts unter das Niveau der Schneidebene des Schneidwerks niedergedrückt wird.

Vorzugsweise sind die in einem Schneidwerksendbereich angeordneten Bauteile der Mähmesservorrichtung 0 mm bis 25 mm, besonders vorzugsweise 10 mm bis 20 mm, nach unten in Richtung Boden gegenüber der Schneidebene überstehend angeordnet. Der Schneidwerksendbereich ist dabei der Bereich, in dem die Gegenschneide und das mit der Gegenschneide zusammenwirkende äußere Klingenelement angeordnet sind. Er erstreckt sich bis zu einer ersten Haltevorrichtung vom äußeren Ende der Mähmesservorrichtung nach innen. Dadurch, dass in einem Schneidwerksendbereich angeordnete Bauteile nicht bzw. nur gering gegenüber der Schneidebene der Mähmesservorrichtung überstehend angeordnet sind, wird ein Niederdrücken des Schnittguts in diesem Bereich reduziert. Die Streifenbildung der Mähmesservorrichtung wird weiter verringert. Insbesondere ist lediglich das Leitelement im Schneidwerksendbereich gegenüber der Schneidebene des Schneidwerks nach unten in Richtung Boden überstehend angeordnet.

Bevorzugt weist die Tragstruktur zumindest einen seitlichen Schneidwerksbefestigungsabschnitt auf, über den das Schneidwerk an der Tragstruktur festgelegt ist, wobei das Schneidwerk unterhalb des Schneidwerksbefestigungsabschnitts an diesem angeordnet ist. Typischerweise werden Schneidwerke auf Schneidewerksbefestigungsabschnitten angeordnet oder in einer Schneidwerksaufnahme einer Tragstruktur angeordnet. Wenn das Schneidwerk demgegenüber unterhalb eines Schneidwerksbefestigungsabschnittes an der Tragstruktur festgelegt ist, kann ein größerer Freiraum unterhalb des Schneidwerks zwischen Schneidebene und Boden erhalten werden. Das Schnittgut wird nicht durch den seitlichen Schneidwerksbefestigungsabschnitt der Tragstruktur niedergedrückt. Hierdurch kann insbesondere ermöglicht werden, dass in einem Schneidwerksendbereich angeordnete Bauteile maximal 0 mm bis 25 mm, bevorzugt 10 mm bis 20 mm nach unten gegenüber der Schneidebene in Richtung Boden überstehen. Weitere Elemente wie Gleitschuhe sind hierzu aus dem Schneidwerksendbereich nach innen versetzt an der Mähmesservorrichtung anzuordnen.

Besonders bevorzugt ist der Antrieb an dem Ende des Schneidwerks angeordnet, das an der Tragstruktur festgelegt ist, und an diesem Ende eine mit dem unteren Schneidmesser zusammenwirkende Gegenschneide angeordnet. Die Anordnung des Antriebs oberhalb der Schneidebene des Schneidwerks vermeidet, dass Schnittgut durch den Antrieb niedergedrückt wird. Die Verwendung einer Gegenschneide, die mit dem unteren Schneidmesser zusammenwirkt und insbesondere unterhalb der Schneidebene des Schneidwerks angeordnet ist, vereinfacht die Kombination von Antrieb und Gegenschneide an dem Ende des Schneidwerks, an dem es an der Tragstruktur festgelegt ist. Das Schneidwerk kann so auf besonders einfach Weise gefertigt werden.

Vorzugsweise ist das äußere Klingenelement als Doppel- oder Mehrfachklingenelement ausgebildet. Ein Doppelklingenelement ist dabei ein Klingenelement, dass zwei Schneideinheiten mit jeweils zwei einander gegenüberliegende Schneiden umfasst. Ein Mehrfachklingenelement ist ein Klingenelement, das mehr als zwei derartige Schneideinheiten mit zwei einander gegenüberliegenden Schneiden umfasst. Durch die Verwendung eines Doppel- bzw. Mehrfachklingenelements als äußeres Klingenelement kann das äußere Klingenelement besonders einfach gegenüber dem Obermesserrücken bzw. dem Untermesserrücken seitlich überstehend an diesem angeordnet werden. Hierzu kann ein Doppelklingenelement im Bereich einer Schneideinheit des Doppelklingenelements an dem jeweiligen Messerrücken festgelegt werden, wobei die andere Schneideinheit des Doppelklingenelements gegenüber dem Messerrücken in seitlicher Richtung übersteht. Bei Mehrfachklingenelementen kann analog vorgegangen werden, wobei zumindest eine Schneideinheit des Mehrfachklingenelements nach außen in seitlicher Richtung gegenüber dem jeweiligen Messerrücken überstehend angeordnet ist. Durch die Verwendung von Doppel- bzw. Mehrfachklingenelementen kann die erfindungsgemäße Mähmesservorrichtung auf besonders einfache Weise realisiert werden.

Bevorzugt sind die Gegenschneide und das äußere Klingenelement so ausgebildet, dass die Gegenschneide vom äußeren Klingenelement beim Schneidvorgang vollständig überschnitten wird. Hierdurch wird das am Ende des Schnittbereichs angeordnete Schnittgut sauber und vollständig abgeschnitten. Die Gefahr von Verstopfungen wird verringert und die Zuverlässigkeit der Mähmesservorrichtung gesteigert.

Vorzugsweise weist die Gegenschneide einen Schnittbereich auf, der sich in einer Aufsicht auf die Schneidebene mindestens soweit in Fahrrichtung erstreckt, wie das mit der Gegenschneide zusammenwirkende äußere Klingenelement. Hierdurch wird Schnittgut zwischen Gegenschneide und äußerem Klingenelement zuverlässig geschnitten und die Verstopfungsgefahr sowie die Streifenbildung reduziert.

Bevorzugt schließt die mit der Gegenschneide zusammenwirkende Schneide des äußeren Klingenelements und die Gegenschneide in einer Aufsicht auf die Schneidebene einen Winkel von maximal 30°, bevorzugt einen Winkel zwischen 10° und 30°, besonders bevorzugt einen Winkel von 15° ein. Der Winkel zwischen äußerem Klingenelement und Gegenschneide ist dabei deutlich spitzer als der Winkel zwischen zwei Klingenelementen des oberen Schneidmessers und des unteren Schneidmessers, der typischerweise in einem Bereich zwischen 40° und 45° Grad, insbesondere bei 42° liegt. Hierdurch wird das Schnittgut zwischen Gegenschneide und äußerem Klingenelement besonders zuverlässig abgetrennt. Die Verstopfungsgefahr und die Streifenbildung werden weiter reduziert.

Vorzugsweise weist die Gegenschneide eine erste Gleitfläche auf und das äußere Klingenelement weist eine korrespondierende Gleitfläche auf. Die beiden Gleitflächen sind dabei so ausgebildet, dass diese zur Führung des äußeren Klingenelements zusammenwirken. Insbesondere eine oberhalb der Schneidebene und oberhalb des oberen Schneidmessers angeordnete Gegenschneide bzw. eine unterhalb der Schneidebene und unterhalb des unteren Schneidmessers angeordnete Gegenschneide stützt so das Schneidmesser im Schneidwerksendbereich. Hierdurch wird verhindert, dass sich zwischen Gegenschneide und äußerem Klingenelement bzw. zwischen den Klingenelementen des oberen Schneidmessers und den Klingenelementen des unteren Schneidmessers in einer Ansicht gegen die Fahrrichtung von vorne ein Spalt bildet, der das Schnittergebnis deutlich negativ beeinträchtigt. Die Führung des oberen Schneidmessers bzw. des unteren Schneidmessers wird hierdurch auf einfache Weise verbessert und die Schneideigenschaften des Schneidwerks gerade im für die Streifenbildung relevanten Randbereich verbessert. Die Streifenbildung wird reduziert und die Zuverlässigkeit der Mähmesservorrichtung erhöht.

Bevorzugt ist benachbart zur Gegenschneide eine Haltevorrichtung für den Untermesserrücken bzw. den Obermesserrücken angeordnet. Besonders bevorzugt wirkt die benachbart zur Gegenschneide angeordnete Haltevorrichtung mit demjenigen Klingenelement zusammen, dass nicht durch eine Gleitfläche der Gegenschneide geführt wird. "Benachbart zur Gegenschneide" bedeutet hierbei, dass die Haltevorrichtung im äußeren Schneidwerksbereich angeordnet ist, also in einem Bereich einer Länge von 100 mm bis 150 mm vom äußeren seitlichen Ende der Mähmesservorrichtung. Bei der benachbart zur Gegenschneide angeordneten Haltevorrichtung handelt es sich um diejenige Haltevorrichtung, die der Gegenschneide am nächsten gelegen ist. Bei der Haltevorrichtung kann es sich um einen Untermesserführungsarm oder um einem Obermessermesserführungsarm handeln. Durch das Vorsehen einer entsprechenden Haltevorrichtung kann vermieden werden, dass im Schneidwerksendbereich, im Bereich neben der Haltevorrichtung nach außen, eine weitere Gleitführung unterhalb der Schneidebene des Schneidwerks angeordnet werden muss. Durch den Verzicht auf ein solche separate Gleitführung kann ein größerer Abstand zwischen Boden und den unterhalb der Schneidebenen des Schneidwerks angeordneten Elementen der Mähmesservorrichtung im Schneidwerksendbereich erreicht werden. Das Schnittgut wird weniger stark nach unten gedrückt und die Streifenbildung dadurch reduziert. Besonders bevorzugt weist die Haltevorrichtung einen in Fahrtrichtung der Mähmesservorrichtung ausgerichteten und den Bereich zum Leitelement bei der Bewegung des oberen und unteren Schneidmessers zueinander zumindest teilweise überdeckenden Abweiser auf. Dieser Abweiser verringert die Gefahr, dass sich Schnittgut in einem Bereich zwischen der Haltevorrichtung und dem Leitelement ansammelt und zu einer Verstopfung führt. Die Zuverlässigkeit der Mähmesservorrichtung ist weiter verbessert.

Alternativ oder zusätzlich weist die Haltevorrichtung ein das Schnittgut von dem Leitelement wegbewegendes Förderelement auf oder ist als ein solches ausgebildet.

Dieses Förderelement kann insbesondere durch ein an der Haltevorrichtung angeordnetes und in einer Richtung etwa parallel zur Fahrtrichtung angeordnetes Blech ausgebildet sein. Das Förderelement bewegt geschnittenes Schnittgut von dem Leitelement weg und vermindert somit die Gefahr einer Verstopfung. Zudem kann eine etwaige Schwadbildung durch ein solches Förderelement unterstützt werden. Die Zuverlässigkeit der Mähmesservorrichtung wird verbessert und die Streifenbildung wird reduziert.

Vorzugsweise weist die Mähmesservorrichtung eine Schwadeinrichtung auf. Die Schwadeinrichtung führt das geschnittene Schnittgut zu einem hinter der Mähmesservorrichtung abgelegten Schwad zusammen. Die Schwadeinrichtung ist insbesondere an oder in Fahrtrichtung hinter dem Leitelement angeordnet. Der Randbereich des Schneidwerks wird von geschnittenem Schnittgut geräumt. Nachfolgende Schnittvorgänge des noch nicht geschnittenen Schnittguts werden nicht durch bereits geschnittenes Schnittgut beeinträchtigt. Die Gefahr einer Verstopfung der Mähmesservorrichtung wird weiter verringert. Zudem kann bei einem etwaigen vorherigen Mähvorgang niedergedrücktes Schnittgut in einem von geschnittenem Schnittgut freigeräumten Bereich einfacher erfasst und sauberer abgeschnitten werden. Die Streifenbildung wird somit weiter verringert.

Bevorzugt weist die Mähmesservorrichtung eine Tragstruktur mit zwei seitlichen Schneidwerksbefestigungsabschnitten auf, über die das Schneidwerk jeweils mit einem Schneidwerksanfang und einem Schneidwerksende an der Tragstruktur festgelegt ist. Insbesondere weist die Mähmesservorrichtung dabei sowohl im Bereich des Schneidwerksanfangs als auch im Bereich des Schneidwerksendes jeweils eine Gegenschneide auf. Weiter bevorzugt sind an beiden Schneidwerksbefestigungsabschnitten jeweils ein Leitelement angeordnet. Eine derart ausgebildete Mähmesservorrichtung kann bspw. als Frontmähwerk verwendet werden.

Vorzugsweise umfasst die Mähmesservorrichtung eine Gegenschneideeinstellvorrichtung, über die die Positionierung und/oder Ausrichtung der Gegenschneide relativ zu der Tragstruktur einstellbar ist. Hierdurch kann die Gegenschneide auf einfache Weise so relativ zu der Tragstruktur und in der Folge zu dem mit der Gegenschneide zusammenwirkenden äußeren Klingenelement des an der Tragstruktur festgelegten Schneidwerks angeordnet werden, dass die Gegenschneide und das äußere Klingenelement für eine gute Schnittleistung zusammenwirken können.

Besonders bevorzugt erlaubt die Gegenschneideeinstellvorrichtung sowohl eine Anpassung der Höhe als auch des Winkels der Gegenschneide relativ zu der Tragvorrichtung. Dies erlaubt eine Ausrichtung der Gegenschneide zum äußeren Klingenelement derart, dass eine gute Schnittleistung über große Teile der Schnittlinie, insbesondere die ganze Schnittlinie, der zusammenwirkenden Schneiden erreicht werden kann.

Weiter besonders bevorzugt umfasst die Gegenschneideeinstellvorrichtung einen Gegenschneidenhalter, an dem die Gegenschneide festgelegt ist. Alternativ kann der Gegenschneidenhalter auch einstückig mit der Gegenschneide ausgeformt sein. Insbesondere wird der Gegenschneidenhalter gegenüber der Tragstruktur über ein Langloch, bevorzugt zumindest zwei Langlöcher, der Gegenschneideneinstellvorrichtung durch Schraubverbindungen festgelegt. Das entsprechende Langloch kann bzw. die entsprechenden Langlöcher können dabei in der Tragstruktur selbst oder an anderen, ihrerseits an der Tragstruktur festgelegten Elementen der Mähmesservorrichtung wie einem Leitelement angeordnet sein. Alternativ kann das Langloch bzw. können die Langlöcher auch in dem Gegenschneidenhalter ausgebildet sein. Die Verwendung von Schraubverbindungen mit einem Langloch ermöglicht es, den Gegenschneidenhalter mit der Gegenschneide in gewissen Bereichen stufenlos variabel relativ zur Tragstruktur zu positionieren und über die Klemmkraft einer Schraubverbindung in der gewählten Position zu fixieren. Hierüber kann eine Mähmesservorrichtung mit einer solchen Gegenschneideeinstellvorrichtung auf besonders einfache Weise realisiert werden. Zudem kann die Gegenschneide bei einer entsprechend ausgebildeten Mähmesservorrichtung zur Reparatur, zum Nachschärfen oder zum Austausch einfach entfernt und wieder montiert werden.

Weitere Vorteile und Einzelheiten der Erfindung sind der nachfolgenden Figurenbeschreibung und beispielhaften erfindungsgemäßen Ausbildung zu entnehmen. In den Figuren zeigt auf schematische Weise:
- Fig. 1: einen Ausschnitt einer erfindungsgemäßen Mähmesservorrichtung mit einem als Leitblech ausgebildeten Leitelement in einer Ansicht gegen die Fahrtrichtung F von schräg oben.
- Fig.- 2: den Ausschnitt nach Fig. 1 in einer Ansicht gegen die Fahrtrichtung von schräg unten;

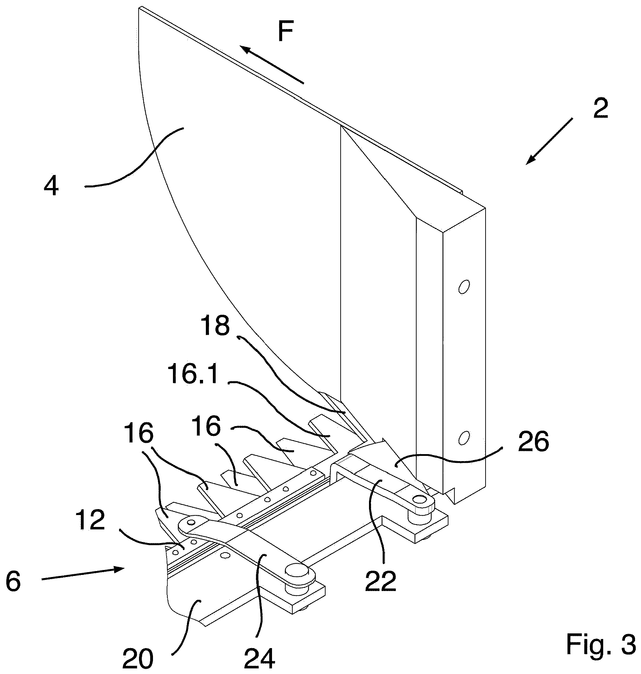

- Fig. 3: den Ausschnitt nach Fig. 1 in einer Ansicht in Fahrtrichtung von schräg oben;
- Fig. 4: den Ausschnitt nach Fig. 1 in einer Darstellung gegen die Fahrtrichtung von vorne;
- Fig. 5 bis Fig. 7: Aufsichten auf den Ausschnitt der erfindungsgemäßen Mähmesservorrichtung nach Fig. 1 mit dem Schneidwerk in verschiedenen Positionen;
- Fig. 8: einen Ausschnitt einer alternativen Ausführungsform einer erfindungsgemäßen Mähmesservorrichtung mit einem als Leitblech ausgebildeten Leitelement in einer Ansicht gegen die Fahrtrichtung F von schräg oben;
- Fig. 9: eine Seitenansicht der Mähmesservorrichtung nach Fig. 8.

Gleich oder ähnlich wirkende Teile sind, sofern dienlich, mit identischen Bezugsziffern versehen. Einzelne technische Merkmale der nachfolgend beschriebenen Ausführungsbeispiele können mit Merkmalen des Anspruchs 1 sowie mit den Merkmalen einzelner vorbeschriebener Ausführungsbeispiele zu erfindungsgemäßen Gegenständen kombiniert werden.

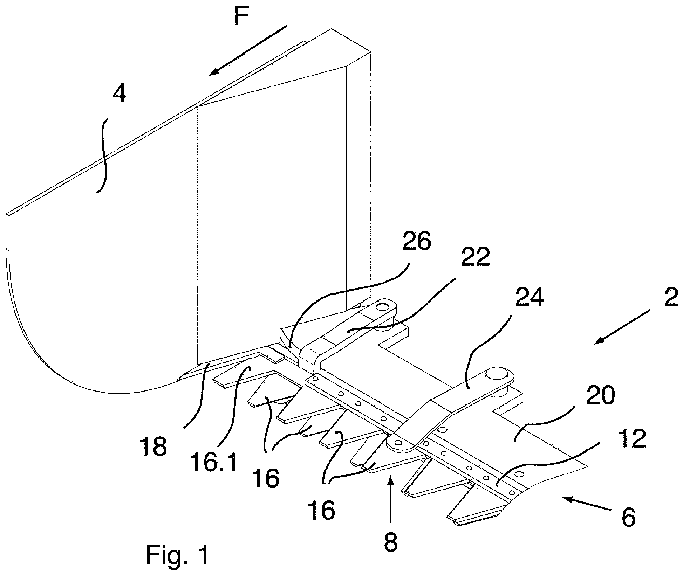

Die Figuren zeigen einen äußeren Abschnitt einer erfindungsgemäßen Mähmesservorrichtung 2, mit einem als Leitblech ausgebildeten Leitelement 4. Fig. 1 zeigt den Abschnitt aus einer Betrachtungsrichtung entgegen einer Fahrrichtung F von schräg oben. Die Tragstruktur der Mähmesservorrichtung 2, an der das Schneidwerk 6 angeordnet ist, ist durch das Leitelement 4 verdeckt. Das Schneidwerk 6 weist ein oberes Schneidmesser 8 und ein unteres Schneidmesser 10 auf. Das obere Schneidmesser 8 und das untere Schneidmesser 10 können durch einen nicht dargestellten Antrieb relativ zueinander in seitlicher Richtung bewegt werden. Der Antrieb ist hierzu vorzugsweise an dem dem dargestellten Abschnitt entgegengesetzten Ende der Mähmesservorrichtung 2 angeordnet.

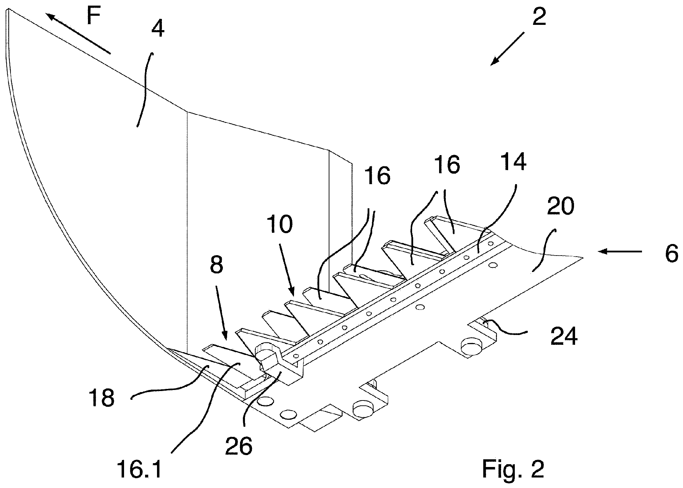

Sowohl das obere Schneidmesser 8 als auch das untere Schneidmesser 10 sind relativ zur Tragstruktur bewegbar. Das obere Schneidmesser 8 weist einen Obermesserrücken 12 auf. Das untere Schneidmesser 10 weist einen Untermesserrücken 14 auf. Das untere Schneidmesser 10 mit dem Untermesserrücken 14 ist in Fig. 2 erkennbar, die den Abschnitt in einer Ansicht entgegen der Fahrrichtung von schräg unten zeigt. Am Obermesserrücken 12 und am Untermesserrücken 14 sind jeweils Klingenelemente 16 angeordnet.

Jedes der Klingenelemente 16 ist in dem dargestellten Ausführungsbeispiel über zwei Befestigungspunkte an den jeweiligen Messerrücken 12,14 festgelegt. Es können jedoch auch mehr Befestigungspunkte oder eine andere Art der Befestigung gewählt werden.

Das äußere Klingenelement 16.1 ist in dem dargestellten Ausführungsbeispiel als Doppelklingenelement ausgebildet. Das äußere Klingenelement 16.1 kann alternativ auch als Mehrfachklingenelement ausgebildet sein. Das äußere Klingenelement 16.1 ist Teil des oberen Schneidmessers 8 und derart am Obermesserrücken 12 angeordnet, dass es gegenüber dem Obermesserrücken 12 ist seitlicher Richtung übersteht. Das äußere Klingenelement 16.1 ist ausgebildet, mit einer Gegenschneide 18 zusammenzuwirken.

Die Gegenschneide 18 ist in dem dargestellten Ausführungsbeispiel an dem als Leitblech ausgebildeten Leitelement 4 angeordnet. Entscheidend ist, dass die Gegenschneide 18 ortsfest relativ zur Tragstruktur der Mähmesservorrichtung 2 angeordnet ist und anders als das obere Schneidmesser 8 und das untere Schneidmesser 10 nicht bewegt wird. Die Gegenschneide 18 kann alternativ auch direkt an der Tragstruktur oder beispielsweise an einem Mähbalken 20 des Schneidwerks 6 angeordnet sein.

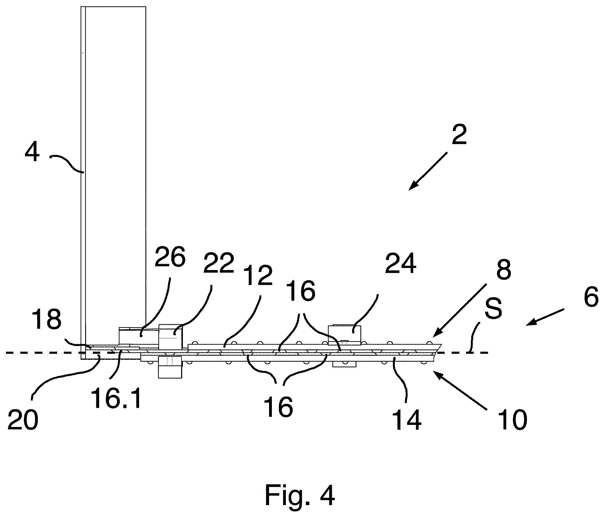

In dem dargestellten Ausführungsbeispiel ist die Gegenschneide 18 oberhalb der durch das obere Schneidmesser 8 und das untere Schneidmesser 10 bzw. den daran angeordneten Klingenelementen 16 definierte Schneidebene S und oberhalb des äußeren Klingenelements 16.1 angeordnet, vergleiche auch die Darstellung in Fig. 4. Die Gegenschneide 18 bildet auf der Unterseite eine erste Gleitfläche aus, die mit einer korrespondierenden Gleitfläche des äußeren Klingenelements 16.1 zusammenwirkt. Zur Vergrößerung der Gleitfläche weist die Gegenschneide 18 in dem Ausführungsbeispiel einen Fuß auf, der sich seitlich in Richtung des Obermesserrückens 12 erstreckt. Gegenschneide 18 und äußeres Klingenelement 16.1 wirken zusammen, um das obere Schneidmesser 8 im äußeren Randbereich zu führen. Hierdurch wird verhindert, dass sich das obere Schneidmesser 8 und das untere Schneidmesser 10 im Randbereich auseinander bewegen, wodurch die Schnittqualität beeinträchtigt würde.

Das obere Schneidmesser 8 und das untere Schneidmesser 10 sind über Haltevorrichtungen 22, 24 am Mähbalken 20 angeordnet. Die Haltevorrichtungen 22, 24 sind als Untermesserführarm 22 und Obermesserführarm 24 ausgebildet. In dem Ausführungsbeispiel ist der Untermesserführarm 22 unmittelbar benachbart zum Leitelement 4 angeordnet und greift an dem je nach Zählweise ersten oder letzten Klingenelement 16 des unteren Schneidmessers 10 an. Eine Gleitführung für das untere Schneidmesser 10, um zu verhindern, dass das obere Schneidmesser 8 und unteres Schneidmesser 10 im Randbereich auseinander bewegt werden und sich ein Spalt zwischen den jeweiligen Klingenelementen 16 in diesem Bereich bildet, durch den das Schnittergebnis beeinträchtigt würde, kann entfallen. Hierdurch wird erreicht, dass im Randbereich der Mähmesservorrichtung 20 die Bauteile nur gering gegenüber der Schneidebene S nach unten in Richtung Boden überstehend angeordnet werden.

In Fig. 4 ist erkennbar, dass im Bereich der Gegenschneide 18 und gegen die Fahrtrichtung F betrachtet lediglich das Leitelement 4 nach unten gegenüber der Schneidebene S übersteht. Erst nach den Klingenelementen 16 schließt sich der Mähbalken 20 an. Das Leitelement 4 kann hierbei auch noch weiter nach unten gegenüber der Schneidebene S überstehen als der danach folgende Mähbalken 20. Hierdurch wird erreicht, dass besonders wenig Schnittgut im Bereich des Leitelements 4 umgeknickt und nach unten gedrückt wird. Das Schnittgut kann sich nach Überfahren mit der Mähmesservorrichtung 2 schneller wiederaufrichten, wodurch ein nachfolgender Mähvorgang erleichtert und eine Streifenbildung reduziert wird.

Hierzu dient auch die Gestaltung der Gegenschneide 18, die vorliegend an dem Leitelement 4 angeordnet und keilförmig ausgebildet ist. Die Schnittfläche der Gegenschneide 18 ist dabei länger als die mit der Gegenschneide 18 zusammenwirkende Schneide des äußeren Klingenelements 16.1. Das äußere Klingenelement 16.1 und die Gegenschneide 18 sind so ausgebildet, dass die Gegenschneide 18 vom äußeren Klingenelement 16.1 vollständig überschnitten wird. Das Leitelement 4 leitet das Schnittgut in den Bereich der Gegenschneide 18. Das Schnittgut wird eng am Leitelement 4 abgetrennt. Es bleibt nur wenig Schnittgut im Bereich des Leitelements 4 ungeschnitten. Die Streifenbildung wird hierdurch weiter vermindert.

Im dargestellten Ausführungsbeispiel ist am Untermesserführungsarm 22 ein Abweiser 26 angeordnet. Dieser ist in Fahrtrichtung nach vorne gerichtet, erstreckt sich entlang des Untermesserführungsarms 22 und taucht in eine entsprechende Ausnehmung des als Leitblech ausgebildeten Leitelements 4 ein. Hierdurch wird verhindert, dass sich geschnittenes Schnittgut im Bereich zwischen Untermesserführungsarm 22 und Leitelement 4 ansammelt. Die Gefahr einer Verstopfung der Mähmesservorrichtung 2 ist reduziert.

Der Untermesserführungsarm 22 weist eine größere Stärke auf als der benachbarte Obermesserführungsarm 24. Hierdurch ist der Untermesserführungsarm 22 des dargestellten Ausführungsbeispiels auch als Förderelement ausgebildet, durch das geschnittene Schnittgut bei einer Bewegung des oberen Schneidmessers 8 und des unteren Schneidmessers 10 und somit des Untermesserführungsarms 22 von dem Leitelement 4 weggefördert wird. Durch die Ausbildung des Untermesserführungsarm 22 als Förderelement wird die Schwadbildung der Mähmesservorrichtung 2 unterstützt. Hierzu kann die Mähmesservorrichtung 2 zudem mit einem Schwadelement versehen sein, das in den Figuren nicht dargestellt ist und sich an das Leitelement 4 anschließend an der Mähmesservorrichtung angeordnet sein kann. Die Schwadeinrichtung kann insbesondere als Schwadblech oder als rotierende Schwadscheibe ausbildet sein.

Die im Ausführungsbeispiel dargestellte Mähmesservorrichtung 2 ist in dem dargestellten Bereich so ausgebildet, dass zu mähendes Schnittgut im Randbereich besonders sauber geschnitten wird. Nicht geschnittenes Schnittgut wird durch das Leitelement 4 nur wenig niedergedrückt. In dem Ausführungsbeispiel ist das Leitelement 4 hierzu konvex ausgebildet. Alternativ kann es auch keilförmig ausgestaltet sein. Das Leitelement 4 teilt das Schnittgut nicht nur in einen an der Mähmesservorrichtung 2 vorbeizuführenden Teil und in einen dem Schneidwerk zuzuführenden Teil, sondern führt das in einem zwischen diesen Teilen liegenden Bereich angeordnete Schnittgut gezielt nach unten und unter der Mähmesservorrichtung 2 entlang. Die Verstopfungsneigung der Mähmesservorrichtung 2 ist deutlich reduziert. Eine derartige Mähmesservorrichtung 2 weist eine deutlich verringerte Streifenbildung auf.

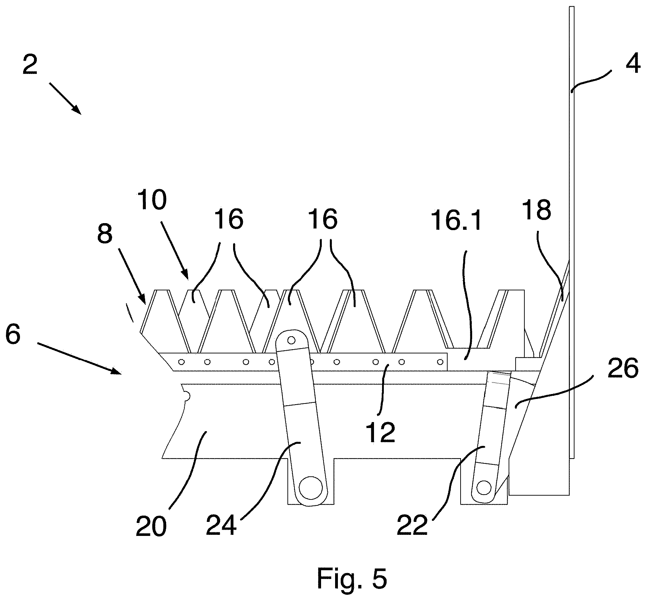

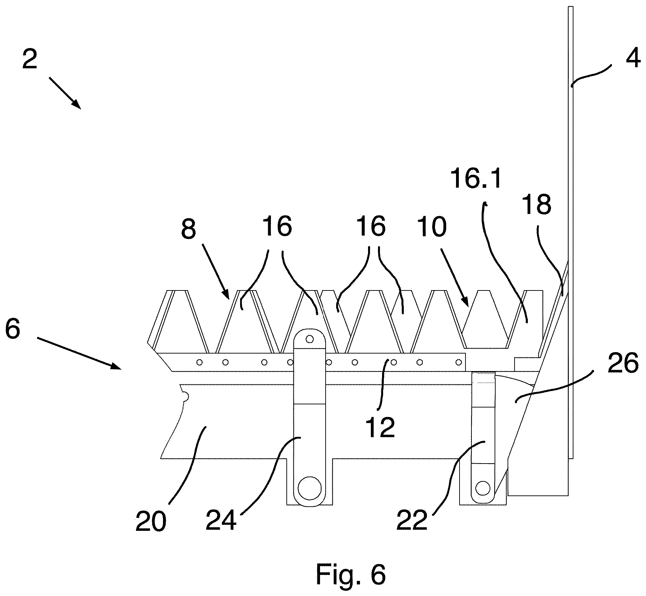

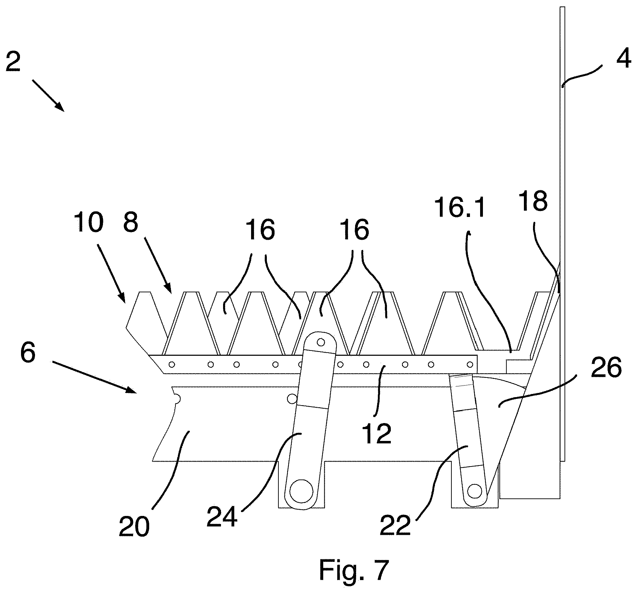

Fig. 5 bis Fig. 7 zeigen den Endbereich der erfindungsgemäßen Mähmesservorrichtung 2 mit dem Schneidwerk 6 in verschiedenen Positionen. In Fig. 5 ist das obere Schneidmesser 8 in einer maximal nach links verschwenkten Position dargestellt. Fig. 6 zeigt das Schneidwerk in einer Mittelposition. In Fig. 7 ist das obere Schneidmesser 8 maximal nach rechts verschwenkt dargestellt. Das untere Schneidmesser 10 ist jeweils in die entgegengesetzte Richtung verschwenkt, in Fig. 5 entsprechend maximal nach rechts verschwenkt und in Fig. 7 maximal nach links verschwenkt dargestellt. Fig. 7 zeigt, dass das in dem dargestellten Ausführungsbeispiel das äußere Klingenelement 16.1 die Gegenschneide 18 vollständig überschneidet.

In den Fig. 5 bis Fig. 7 ist erkennbar, dass in dem dargestellten Ausführungsbeispiel der von der Gegenschneide 18 und dem äußeren Klingenelement 16.1 eingeschlossener Winkel deutlich kleiner ist, als der Winkel zwischen jeweils zwei weiteren Klingenelementen 16 des oberen Schneidmessers 8 und des unteren Schneidmessers 10.

Weiterhin ist zu erkennen, dass das Leitelement 4 deutlich schmaler ist als die Klingenelemente 16 bzw. eine Schneideinheit der Klingenelemente 16, die durch zwei einander gegenüberliegenden Schneiden der Klingenelemente 16 definiert ist. Das entsprechend schmal ausgeführte Leitelement 4 führt nur wenig Schnittgut nach unten an der Mähmesservorrichtung 2 vorbei. Die Streifenbildung ist verringert.

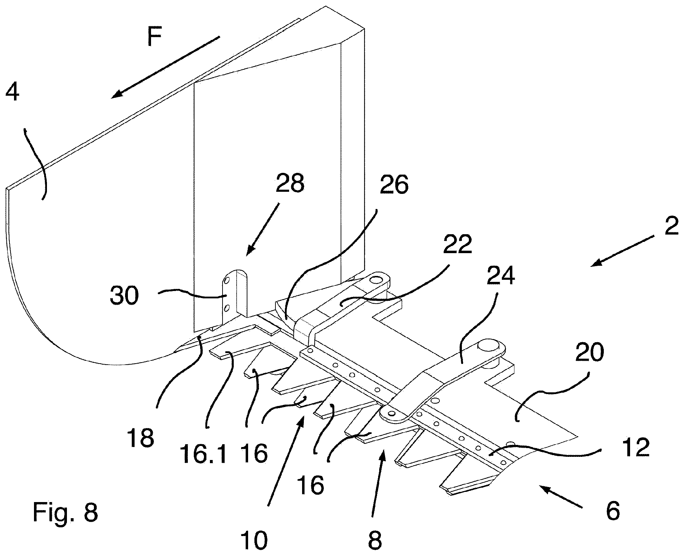

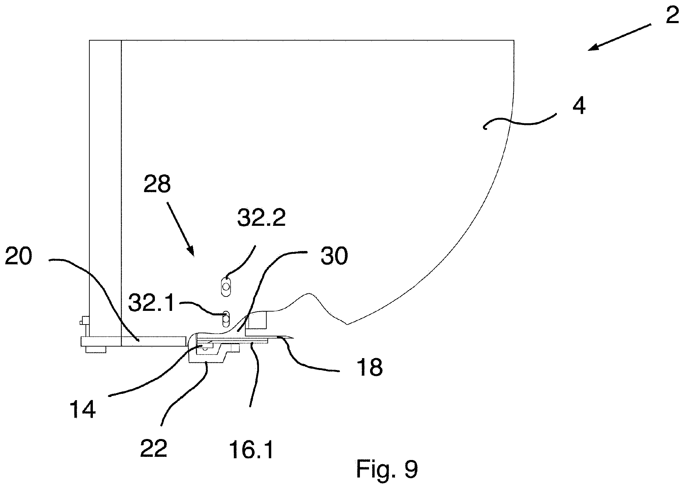

Fig. 8 und 9 zeigen ein alternatives Ausführungsbeispiel einer Mähmesservorrichtung. Fig. 8 zeigt einen äußeren Abschnitt einer Mähmesservorrichtung 2 aus einer Betrachtungsrichtung entgegen einer Fahrrichtung F von schräg oben. Fig. 9 zeigt eine Ansicht der Mähmesservorrichtung 2 von der Seite auf das Leitelement 4, wobei ein Teil des Leitelements 4 im Bereich der Gegenschneide 18 freigebrochen dargestellt ist. Das dargestellte alternative Ausführungsbeispiel der Mähmesservorrichtung 2 umfasst eine Gegenschneideeinstellvorrichtung 28 mit einem Gegenschneidenhalter 30 sowie zwei Langlöchern 32.1 und 32.2 im Leitelement 4. Die Gegenschneide 18 ist an dem Gegenschneidenhalter 30 angeordnet. Über die Gegenschneideeinstellvorrichtung 28 kann die Gegenschneide 18 sowohl in der Höhe als auch im Winkel eingestellt werden. Die Gegenschneide 18 kann hierdurch auf einfache Weise so eingestellt werden, dass das äußere Klingenelement 16.1 und die Gegenschneide 18 optimal aufeinander aufliegen und kein Schnittspalt entsteht. Anschließend wird der Gegenschneidenhalter 30 über Schraubverbindungen an dem Leitelement 4 fixiert. Durch eine solche Ausrichtung kann eine gute Schnittleistung der Mähmesservorrichtung 2 gerade im Bereich der Gegenschneide 18 erreicht werden. Zudem ist kann die Gegenschneide 18 hierdurch zur Reparatur, zum Nachschärfen oder zum Austausch einfach entfernt und wieder montiert werden.

## Patentansprüche

1. Mähmesservorrichtung (2) mit einer Tragstruktur und einem an der Tragstruktur festgelegten Schneidwerk (6), wobei das Schneidwerk (6) als Doppelmesser-Schneidsystem ausgebildet ist und ein oberes Schneidmesser (8) und ein unteres Schneidmesser (10) umfasst, die mittels eines Antriebs der Mähmesservorrichtung (2) relativ zueinander bewegbar ausgebildet sind, wobei das obere Schneidmesser (8) einen Obermesserrücken (12) und das untere Schneidmesser (10) einen Untermesserrücken (14) aufweist und an dem Obermesserrücken (12) und dem Untermesserrücken (14) jeweils mehrere Klingenelemente (16) festgelegt sind, die eine Schneidebene (S) des Schneidwerks (6) definieren, wobei die Mähmesservorrichtung (2) zumindest eine relativ zu der Tragstruktur ortsfest angeordnete und mit einem äußeren Klingenelement (16.1) des oberen Schneidmessers (8) oder des unteren Schneidmessers (10) zusammenwirkende Gegenschneide (18) umfasst, **dadurch gekennzeichnet, dass** das äußere Klingenelement (16.1) in Richtung der Gegenschneide (18) gegenüber dem Obermesserrücken (12) oder Untermesserrücken (14) seitlich überstehend an diesem angeordnet ist.

2. Mähmesservorrichtung nach Anspruch 1, **gekennzeichnet durch** ein seitlich eines Schnittbereichs des Schneidwerks (6) angeordnetes Leitelement (4), insbesondere ein Leitblech.

3. Mähmesservorrichtung nach Anspruch 2, **dadurch gekennzeichnet, dass** das Leitelement (4) nach vorne in Fahrtrichtung (F) gegenüber dem Schneidwerk (6) überstehend angeordnet ist und mit zunehmenden Abstand nach vorne in Fahrtrichtung (F) einen zunehmenden Abstand senkrecht zur Schneidebene (S) des Schneidwerks (6) aufweist.

4. Mähmesservorrichtung nach Anspruch 3, **dadurch gekennzeichnet, dass** das Leitelement (4) im Bereich des Schneidwerks (6) nach unten gegenüber der Schneidebene (S) überstehend angeordnet ist.

5. Mähmesservorrichtung nach einem der vorhergehenden Ansprüche, **dadurch gekennzeichnet, dass** in einem Schneidwerksendbereich angeordnete Bauteile der Mähmesservorrichtung (2) 0 mm bis 25 mm, bevorzugt 10 mm bis 20 mm, nach unten in Richtung Boden gegenüber der Schneidebene (S) überstehend angeordnet sind.

6. Mähmesservorrichtung nach einem der vorhergehenden Ansprüche, **dadurch gekennzeichnet, dass** die Tragstruktur zumindest einen seitlichen Schneidwerksbefestigungsabschnitt aufweist, an dem das Schneidwerk (6) einenends an der Tragstruktur festgelegt ist, wobei das Schneidwerk (6) unterhalb des Schneidwerksbefestigungsabschnitts an diesem angeordnet ist.

7. Mähmesservorrichtung nach Anspruch 6, **dadurch gekennzeichnet, dass** der Antrieb an dem Ende des Schneidwerks (6) angeordnet ist, das an der Tragstruktur festgelegt ist, und wobei in diesem Bereich eine mit dem unteren Schneidmesser (10) zusammenwirkende Gegenschneide (18) angeordnet ist.

8. Mähmesservorrichtung nach einem der vorhergehenden Ansprüche, **dadurch gekennzeichnet, dass** das äußere Klingenelement (16.1) als Doppel- oder Mehrfachklingenelement ausgebildet ist.

9. Mähmesservorrichtung nach einem der vorhergehenden Ansprüche, **dadurch gekennzeichnet, dass** die mit der Gegenschneide (18) zusammenwirkende Schneide des äußeren Klingenelements (16.1) und die Gegenschneide (18) in einer Aufsicht auf die Schnittebene (S) einen Winkel von maximal 30°, bevorzugt einen Winkel zwischen 10° und 30°, besonders bevorzugt einen Winkel von 15°, einschließen.

10. Mähmesservorrichtung nach einem der vorhergehenden Ansprüche, **dadurch gekennzeichnet, dass** die Gegenschneide (18) eine erste Gleitfläche aufweist und das äußere Klingenelement (16.1) eine korrespondierende Gleitfläche aufweist, wobei die Gleitflächen zur Führung des äußeren Klingenelements (16.1) zusammenwirkend ausgebildet sind.

11. Mähmesservorrichtung nach einem der vorhergehenden Ansprüche, **dadurch gekennzeichnet, dass** benachbart zur Gegenschneide (18) eine Haltevorrichtung (22, 24) für den Untermesserrücken (14) oder den Obermesserrücken (12) angeordnet ist, die insbesondere einen in Fahrtrichtung (F) der Mähmesservorrichtung (2) ausgerichteten und den Bereich zum Leitelement (4) bei der Bewegung des oberen und unteren Schneidmessers (8, 10) zueinander zumindest teilweise überdeckenden Abweiser (26) aufweist.

12. Mähmesservorrichtung nach Anspruch **11** unter Einschluss von Anspruch 2, **dadurch gekennzeichnet, dass** die Haltevorrichtung (22, 24) ein das Schnittgut von dem Leitelement (4) wegbewegendes Förderelement umfasst oder ein solches Förderelement ausbildet.

13. Mähmesservorrichtung nach einem der vorhergehenden Ansprüche, **dadurch gekennzeichnet, dass** diese eine Schwadeinrichtung aufweist.

14. Mähmesservorrichtung nach einem der vorhergehenden Ansprüche, **gekennzeichnet durch** eine Gegenschneideeinstellvorrichtung (28), über die die Positionierung und/oder Ausrichtung der Gegenschneide (18) relativ zur Tragstruktur einstellbar ist.

15. Mähmesservorrichtung nach Anspruch **14, dadurch gekennzeichnet, dass** die Gegenschneideeinstellvorrichtung (28) einen Gegenschneidenhalter (30) umfasst, an dem die Gegenschneide (18) angeordnet ist, wobei die Gegenschneideeinstellvorrichtung (28) Langlöcher (32.1, 32.2) umfasst, an denen der Gegenschneidenhalter (30) mittels Schraubverbindungen in unterschiedlicher Positionierung und/oder Ausrichtung relativ zur Tragstruktur festlegbar ist.

## Claims

1. A mower blade device (2) with a support structure and a cutterbar (6) fixed to the support structure, wherein the cutterbar (6) is designed as a double-blade cutting system and comprises an upper cutting blade (8) and a lower cutting blade (10), which are designed to be movable relative to each other via a drive of the mower blade device (2), wherein the upper cutting blade (8) has an upper blade back (12) and the lower cutting blade (10) has a lower blade back (14) and several blade elements (16) are respectively fixed to the upper blade back (12) and the lower blade back (14), which define a cutting plane (S) of the cutterbar (6), wherein the mower blade device (2) comprises at least one counter blade (18) which is fixedly arranged relative to the support structure and which interacts with an outer blade element (16.1) of the upper cutting blade (8) or the lower cutting blade (10), **characterized in that** the outer blade element (16.1) is arranged to project laterally beyond the upper blade back (12) or lower blade back (14) in the direction of the counter blade (18) (with respect to the latter).

2. The mower blade device according to claim 1, **characterized by** a guide element (4), in particular a guide plate, arranged laterally of a cutting area of the cutterbar (6).

3. The mower blade device according to claim 2, **characterized in that** the guide element (4) is arranged projecting forwards in the direction of travel (F) relative to the cutterbar (6) and, with increasing distance forwards in the direction of travel (F), has an increasing distance perpendicular to the cutting plane (S) of the cutterbar (6).

4. The mower blade device according to claim 3, **characterized in that** the guide element (4) is arranged in the area of the cutterbar (6) so as to project downwards relative to the cutting plane (S).

5. The mower blade device according to one of the preceding claims, **characterized in that** components of the mower blade device (2) arranged in an end area of the cutterbar are arranged to project 0 mm to 25 mm, preferably 10 mm to 20 mm, downwards in the direction of the ground relative to the cutting plane (S).

6. The mower blade device according to one of the preceding claims, **characterized in that** the support structure has at least one lateral cutterbar mounting section, on which the cutterbar (6) is fixed at one end to the support structure, wherein the cutterbar (6) is arranged below the cutterbar mounting section therein.

7. The mower blade device according to claim 6, **characterized in that** the drive is arranged at the end of the cutterbar (6) which is fixed to the support structure, and wherein a counter blade (18) cooperating with the lower cutting blade (10) is arranged in this area.

8. The mower blade device according to one of the preceding claims, **characterized in that** the outer blade element (16.1) is designed as a double blade element or multiple blade element.

9. The mower blade device according to one of the preceding claims, **characterized in that** the cutting edge of the outer blade element (16.1) cooperating with the counter blade (18) and the counter blade (18) enclose an angle of at most 30°, preferably an angle between 10° and 30°, particularly preferably an angle of 15°, in a top view of the cutting plane (S).

10. The mower blade device according to one of the preceding claims, **characterized in that** the counter blade (18) has a first sliding surface and the outer blade element (16.1) has a corresponding sliding surface, wherein the sliding surfaces are designed to cooperate for guiding the outer blade element (16.1).

11. The mower blade device according to one of the preceding claims, **characterized in that** a holding device (22, 24) for the lower blade back (14) or the upper blade back (12) is arranged adjacent to the counter blade (18), which holding device (22, 24) in particular has a deflector (26) aligned in the direction of travel (F) of the mower blade device (2) and at least partially covering the area to the guide element (4) when the upper and lower cutting blades (8, 10) move relative to each other.

12. The mower blade device according to claim 11, including claim 2, **characterized in that** the holding device (22, 24) comprises a conveyor element that moves the cut material away from the guide element (4) or forms such a conveyor element.

13. The mower blade device according to one of the preceding claims, **characterized in that** it comprises a swathing device.

14. The mower blade device according to one of the preceding claims, **characterized by** a counter blade adjustment device (28), by means of which the positioning and/or alignment of the counter blade (18) relative to the support structure can be adjusted.

15. The mower blade device according to claim 14, **characterized in that** the counter blade adjustment device (28) comprises a counter blade holder (30) on which the counter blade (18) is arranged, wherein the counter blade adjustment device (28) comprises elongated holes (32.1, 32.2) on which the counter blade holder (30) can be fixed in different positioning and/or orientation relative to the support structure via screw connections.

## Revendications

1. Dispositif de lame de fauche (2) comprenant une structure porteuse et un organe tranchant (6) fixé à la structure porteuse, l'organe tranchant (6) étant réalisé sous la forme d'un système tranchant à double lame et comprenant une lame tranchante supérieure (8) et une lame tranchante inférieure (10), qui sont conçues pour être déplaçables l'une par rapport à l'autre au moyen d'un entraînement du dispositif de lame de fauche (2), la lame tranchante supérieure (8) présentant un dos de lame supérieure (12) et la lame tranchante inférieure (10) présentant un dos de lame inférieure (14), plusieurs éléments coupants (16) étant respectivement fixés sur le dos de lame supérieure (12) et sur le dos de lame inférieure (14), lesquels définissent un plan tranchant (S) de l'organe tranchant (6), le dispositif de lame de fauche (2) comprenant au moins un contre-tranchant (18) disposé de manière fixe par rapport à la structure porteuse et coopérant avec un élément coupant extérieur (16.1) de la lame tranchante supérieure (8) ou de la lame tranchante inférieure (10), **caractérisé en ce que** l'élément coupant extérieur (16.1) est disposé en saillie latérale par rapport au dos de lame supérieure (12) ou au dos de lame inférieure (14) en direction de la contrelame (18).

2. Dispositif de lame de fauche selon la revendication 1, **caractérisé par** un élément de guidage (4) disposé latéralement d'une zone de tranchage de l'organe tranchant (6), notamment une tôle de guidage.

3. Dispositif de lame de fauche selon la revendication 2, **caractérisé en ce que** l'élément de guidage (4) est disposé en saillie vers l'avant dans le sens de déplacement (F) par rapport à l'organe tranchant (6) et présente, avec une distance croissante vers l'avant dans le sens de déplacement (F), une distance croissante perpendiculairement au plan tranchant (S) de l'organe tranchant (6).

4. Dispositif de lame de fauche selon la revendication 3, **caractérisé en ce que** l'élément de guidage (4) est disposé, dans la zone de l'organe tranchant (6), en saillie vers le bas par rapport au plan tranchant (S).

5. Dispositif de lame de fauche selon l'une des revendications précédentes, **caractérisé en ce que** des composants du dispositif de lame de fauche (2) disposés dans une zone d'extrémité de l'organe tranchant sont disposés en saillie vers le bas en direction du sol de 0 mm à 25 mm, de préférence de 10 mm à 20 mm, par rapport au plan tranchant (S).

6. Dispositif de lame de fauche selon l'une des revendications précédentes, **caractérisé en ce que** la structure porteuse présente au moins une section latérale de fixation de l'organe tranchant, sur laquelle l'organe tranchant (6) est fixé à une extrémité à la structure porteuse, l'organe tranchant (6) étant disposé au-dessous de ladite section de fixation de l'organe tranchant.

7. Dispositif de lame de fauche selon la revendication 6, **caractérisé en ce que** l'entraînement est disposé à l'extrémité de l'organe tranchant (6) qui est fixée à la structure porteuse, et dans lequel un contre-tranchant (18) coopérant avec la lame tranchante inférieure (10) est disposé dans cette zone.

8. Dispositif de lame de fauche selon l'une des revendications précédentes, **caractérisé en ce que** l'élément coupant extérieur (16.1) est réalisé sous la forme d'un élément coupant double ou multiple.

9. Dispositif de lame de fauche selon l'une des revendications précédentes, **caractérisé en ce que** le tranchant de l'élément coupant extérieur (16.1) coopérant avec le contre-tranchant (18) et le contre-tranchant (18) forment, en vue en plan sur le plan tranchant (S), un angle maximal de 30°, de préférence un angle compris entre 10° et 30°, de manière particulièrement préférée un angle de 15°.

10. Dispositif de lame de fauche selon l'une des revendications précédentes, **caractérisé en ce que** le contre-tranchant (18) présente une première surface de glissement et l'élément coupant extérieur (16.1) présente une surface de glissement correspondante, les surfaces de glissement étant conçues pour coopérer afin de guider l'élément coupant extérieur (16.1).

11. Dispositif de lame de fauche selon l'une des revendications précédentes, **caractérisé en ce qu'**un dispositif de maintien (22, 24) pour le dos de lame inférieure (14) ou le dos de lame supérieure (12) est disposé au voisinage du contre-tranchant (18), lequel comprend notamment un déflecteur (26) orienté dans le sens de déplacement (F) du dispositif de lame de fauche (2) et recouvrant au moins partiellement la zone vers l'élément de guidage (4) lors du mouvement relatif des lames tranchantes supérieure et inférieure (8, 10).

12. Dispositif de lame de fauche selon la revendication 11 en combinaison avec la revendication 2, **caractérisé en ce que** le dispositif de maintien (22, 24) comprend un élément de transport déplaçant le produit de coupe à l'écart de l'élément de guidage (4) ou forme un tel élément de transport.

13. Dispositif de lame de fauche selon l'une des revendications précédentes, **caractérisé en ce qu'**il présente un appareil d'andainage.

14. Dispositif de lame de fauche selon l'une des revendications précédentes, **caractérisé par** un dispositif de réglage du contre-tranchant (28), par l'intermédiaire duquel le positionnement et/ou l'orientation du contre-tranchant (18) par rapport à la structure porteuse sont réglables.

15. Dispositif de lame de fauche selon la revendication 14, **caractérisé en ce que** le dispositif de réglage du contre-tranchant (28) comprend un support de contre-tranchant (30), sur lequel le contre-tranchant (18) est disposé, le dispositif de réglage du contre-tranchant (28) comprenant des trous oblongs (32.1, 32.2) au niveau desquels le support de contre-tranchant (30) est fixable, au moyen de liaisons vissées, dans différentes positions et/ou orientations par rapport à la structure porteuse.
